Europäisches Patentamt

(19) European Patent Office

Office européen des brevets

(11) Publication number: 0 114 724
A2

(12) EUROPEAN PATENT APPLICATION

(21) Application number: 84300098.5

(22) Date of filing: 06.01.84

(51) Int. Cl.³: C 08 K 5/00
C 08 L 23/02, H 01 B 3/44

(30) Priority: 18.01.83 GB 8301345

(43) Date of publication of application:
01.08.84 Bulletin 84/31

(84) Designated Contracting States:
AT BE DE FR GB IT NL SE

(71) Applicant: IMPERIAL CHEMICAL INDUSTRIES PLC
Imperial Chemical House Millbank
London SW1P 3JF(GB)

(72) Inventor: Gilby, Gordon William
86 Park Meadow
Hatfield Hertfordshire(GB)

(72) Inventor: Cartwright, Philip John
6 Derwent Avenue
Guisborough Cleveland(GB)

(74) Representative: James, David Gomer et al,
Imperial Chemical Industries PLC Legal Department:
Patents Po Box 6
Welwyn Garden City Herts, AL7 1HD(GB)

(54) Polymer composition.

(57) A ploymer composition comprises an olefin polymer or copolymer, for example an ethylene-vinyl acetate copolymer, and a filler, where the filler is from 30% up to 90% by weight of the polymer + filler, together with a mixture of a) a metal salt of a carboxylic acid, for example zinc stearate, and b) an organic ester, an organic phosphate or a plant oil which can be a soya bean oil, especially an epoxidised soya bean oil. The filler can be one or more flame retardant and/or smoke suppresant materials to give a flame retardant composition or can be a filler capable of giving sound-deadening characteristics, for example barium sulphate. The composition has good processability.

EP 0 114 724 A2

0114724
P.32564 EP

# POLYMER COMPOSITION

The present invention relates to polymer compositions and, in particular to olefin polymers containing a filler and a processing aid.

In recent years there has been increasing interest in polymer compositions containing a high proportion, for example at least 30% by weight, of a filler material. Depending on the filler material used, the composition may be used as an insulator, or outer sheath, for electric conductors; or as a sound deadening material; or in an application in which improved mechanical properties are desired. The presence of high levels of a filler material reduces the processibility of the composition, and this is undesirable if the composition is to be used in an injection moulding or extrusion process. The processibility can be improved by using higher processing temperatures but this can cause problems with compositions containing flame retardant additives or free radical generators such as peroxides. Processibility can be improved by the use of processing aids. However, with low levels of processing aid the improvement achieved is not entirely satisfactory whereas with higher levels of processing aid the mechanical properties of the composition, particularly the tensile properties, are adversely affected. Furthermore, the processing aid is generally more flammable than the filler and hence higher levels of the processing aid are particularly undesirable in compositions intended to possess fire retardant characteristics. It is therefore desirable to provide a polymer composition having a high level of filler, that is at least 30% by weight, and having an improved processibility.

According to the present invention there is provided a polymer composition comprising an olefin polymer, a filler material and a processing aid wherein the composition contains from 30 up to 90% by weight of the filler material, based on the total weight of the polymer composition, and from 2 up to 8% by weight of the processing aid, based on the total weight of the polymer composition, where the processing aid is a mixture of a) 20 to 80% by weight of a metal salt of a carboxylic acid containing at least 6 carbon atoms and correspondingly b) 80 to 20% by weight of either an organic ester which is derived from a carboxylic acid containing at least 6 carbon atoms; an organic phosphate, or a plant oil.

For convenience hereafter the metal salt of a carboxylic acid containing at least 6 carbon atoms will be referred to as the "metal carboxylate", and the organic ester which is derived from a carboxylic acid containing at least 6 carbon atoms will be referred to simply as the "organic ester".

The olefin polymer may be a homopolymer or a copolymer of an olefin monomer, particularly ethylene. The olefin monomer may be copolymerised with another olefin monomer or with a polar monomer such as an unsaturated carboxylic acid or an ester thereof, for example a copolymer of ethylene and vinyl acetate. Copolymers of an olefin monomer with a polar monomer may contain up to 50% by weight of the polar comonomer.

The olefin polymer is preferably a copolymer of ethylene and vinyl acetate containing 10 to 40% by weight of vinyl acetate and especially 15 to 35% by weight of vinyl acetate.

The preferred olefin polymer is one having a molecular weight which is appropriate for a material which can be used for the production of shaped articles by an injection moulding or extrusion process. Thus, particularly suitable ethylene polymers or copolymers are those having a melt flow index, measured according to British Standard 2782, Part 1/105C of 1976 using a 2.16 kg load at 190°C, which is in the range from 0.5 up to 40, and especially from 1.0 up to 10.

If desired, a mixture of olefin polymers can be used, for example a mixture of two polyethylenes having different characteristics, a mixture of polyethylene and a copolymer of ethylene and vinyl acetate or a mixture of two different copolymers of ethylene and vinyl acetate.

A wide range of filler materials may be used depending on the intended use of the polymer composition and, if desired, a mixture of filler materials may be used. Filler materials which may be used include magnesium hydroxide, aluminium hydroxide, calcium carbonate, silica, alumina, magnesia, calcium oxide, antimony trioxide ($Sb_2O_3$), glass fibre, iron oxide, barium sulphate, talc, mica or powdered slate.

As a preferred composition in accordance with the present invention, the filler material is one or more compounds which provide fire retardant and/or smoke suppresant characteristics to the polymer composition. In this preferred composition there is typically a separate fire retardant component and a separate smoke suppressant component. We particularly prefer that the components are halogen-free, or contain only a small proportion, such as less than 10% by weight of the total composition, of halogen-containing compounds. The fire retardant component is preferably a compound which liberates water on heating, for example aluminium hydroxide, and particularly is a compound which liberates water at a temperature of at least 260°C, for example magnesium hydroxide. The fire retardant components may be coated, for example with a suitable lubricant. The smoke suppressant component is conveniently precipitated calcium carbonate, which typically has a maximum particle size of less than one micron and particularly of less than 0.1 micron. The proportion of the fire retardant component is preferably in the range from 25 up to 60% by weight of the polymer composition and the proportion of the smoke suppressant component is preferably in the range from 0 up to 25% by weight of the polymer composition. In addition to the fire retardant component and the smoke suppressant component, the polymer composition may include minor proportions, that is less than 10% by weight, of other additives such as reinforcing agents, for example silica, or free moisture absorbers, for example calcium oxide.

A polymer composition in which the polymer is polyethylene or a copolymer of ethylene and vinyl acetate, which contains a fire retardant component and a smoke suppressant component can be used as an insulator or sheath for electrical wiring. Such a composition, if subjected to fire conditions, typically evolves fumes having a lower toxicity than the fumes evolved by PVC based materials and furthermore gives a lower smoke density. Both of these characteristics reduce the hazards in a fire in which such sheathed electrical wiring is involved.

Thus, as a preferred aspect of the present invention there is provided a polymer composition containing from 30 up to 90% by weight of a filler material, based on the total weight of the polymer composition, and comprising polyethylene or a copolymer of ethylene and vinyl acetate; 25 up to 60% by weight of the total composition of magnesium hydroxide or aluminium hydroxide; 0 up to 25% by weight of the total composition of precipitated calcium carbonate; 0 up to 10% of a reinforcing agent; 0 up to 5% of a free moisture absorber; and 2 up to 8% of a processing aid which is a mixture of a) 20 to 80% by weight of a metal carboxylate and correspondingly b) 80 to 20% by weight of an organic ester, organic phosphate, or a plant oil.

Whilst a halogen-free fire retardant polymer composition is a preferred aspect of the present invention, it should be appreciated that all, or part, of the fire retardant component can be replaced by a halogen-containing fire retardant component. Preferably, only a part of the halogen-free material is replaced by a halogen-containing material. It is especially preferred that the amount of the halogen-containing fire retardant component does not exceed 10% by weight of the polymer composition, with the proportion of the halogen-free fire retardant component being correspondingly reduced. The halogen-containing fire retardant component can be used together with other additives which are known for use in fire retardant systems, for example antimony compounds such as antimony trioxide ($Sb_2O_3$). The halogen-containing fire retardant component may be any such material which is known to impart fire retardant properties to olefin polymers and such materials include decabromodiphenyloxide, octabromodiphenyloxide, and also halogenated bis-imide type fire retardants.

Alternatively, the filler material can be a sound-deadening material, for example barium sulphate, calcium carbonate, iron oxide, mica and powdered slate, when the filler material is typically present in an amount in the range from 50 up to 90% by weight of the polymer composition.

According to a further embodiment, there is provided a magnetic polymer composition wherein the filler material is magnetic iron oxide and is present in an amount in the range from 60 up to 90% by weight of the polymer composition.

The processing aid is preferably used in an amount of at least 3.0% by weight and not more than 6.0% by weight of the polymer composition. The processing aid generally contains at least 25% by weight of each of component (a)

0114724

and component (b) and preferably contains 40 to 60% by weight of the metal carboxylate and correspondingly 60 to 40% by weight of the organic ester, the organic phosphate or a plant oil.

Whilst a number of different materials can be used as component b) of the processing aid, component a) is a metal carboxylate and is conveniently a salt of a metal of Group IA or IIA of the Periodic Table, for example sodium, calcium or, especially, zinc. The metal carboxylate is preferably a salt of a saturated aliphatic carboxylic acid, especially one containing at least 10 carbon atoms and not more than 20 carbon atoms, for example dodecanoic acid, hexadecanoic acid or, particularly octadecanoic acid.

The organic ester may be an ester, particularly an alkyl ester, of an aromatic carboxylic acid such as benzoic acid or phthalic acid, for example di-(2-ethylhexyl) phthalate. However, we prefer that the organic ester is an ester of a saturated aliphatic carboxylic acid, (hereafter simply "aliphatic ester") especially one containing at least 10 carbon atoms and not more than 20 carbon atoms, for example dodecanoic acid, hexadecanoic acid or, particularly, octadecanoic acid. The ester may be obtained from a hydroxycarboxylic acid such as, for example, hydroxyoctadecanoic acid. The ester is preferably derived from a mono-, di- or poly-aliphatic alcohol such as n-butanol, glycol or glycerol. Whilst the di- or poly-aliphatic alcohols may be only partially esterified, it is preferred that the alcohol is fully esterified. Examples of esters of aliphatic carboxylic acid include n-butyloctadecanoate or glyceryl tris-(hydroxyoctadecanoate).

The organic phosphate contains hydrocarbyl groups and optionally hydrogen and is preferably a tri-hydrocarbyl phosphate. The organic phosphate may be a trialkyl phosphate such as tris-(2-ethylhexyl) phosphate but it is preferred that each hydrocarbyl group is, or contains, an aromatic group, such as a xylyl or tolyl as in trixylyl phosphate and tritolyl phosphate.

The plant oil may be a soya bean oil although it will be appreciated that other plant oils may be used, particularly those having similar compositions and/or properties to soya bean oil. The plant oil is preferably an epoxidised plant oil for example an epoxidised soya bean oil, particularly one having an epoxy oxygen content of from 4 up to 10% by weight, especially 5 to 7% by weight.

We particularly prefer that component b) of the processing aid is an epoxidised soya bean oil since we have found that such compositions generally have good heat ageing characteristics. However, it will be appreciated that, for applications in which good heat ageing characteristics are of little importance, the other materials, such as an aliphatic ester or tri-aromatic phosphate, may be used as component b) of the processing aid.

Thus, as a particularly preferred embodiment of the present invention there is provided a polymer composition comprising a copolymer of ethylene with 15 to 35% by weight of vinyl acetate; 30 to 90% by weight of the total composition of a filler material; and 2 to 8% by weight of the composition of a processing aid which is a mixture of a) 20 to 80% by weight of zinc octadecanoate and correspondingly b) 80 to 20% by weight of an epoxidised soya bean oil having an epoxy oxygen content of from 4 up to 10% by weight.

In addition to the polymer, filler material and processing aid, the polymer composition typically includes additives to at least partially inhibit the degradation of the olefin polymer component of the composition. These additives include, inter alia, antioxidants, light stabilisers and, as necessary, copper or metal deactivators. The proportion of each of such additives is typically less than 2% by weight based on the olefin polymer and in general does not exceed 1% by weight based on the olefin polymer. A wide range of additives which provide some inhibition of the degradation of olefin polymers are known and the skilled worker will be able to select appropriate additives in accordance with the particular olefin polymer and the conditions under which it is to be processed and used. Examples of additives which can be used include 1,1,3-tris(2-methyl-4-hydroxy-5-tertiarybutylphenyl)butane in combination with dilaurylthiodipropionate; polymerised 1,2-dihydro-2,2,4-trimethylquinoline; 2,6-di-tertiarybutyl-4-methylphenol; 4,4-thio-bis-(6-tertiarybutyl-4-methyl phenol); oxalic acid bis (benzylidene hydrazide); and N,N'-bis (beta-3,5-ditertiarybutyl-4-hydroxy phenylpropiono) hydrazide.

The polymeric compositions in accordance with the present invention may be formed into shaped articles by any suitable technique, particularly by injection moulding or, especially, by extrusion.

To improve the performance of some polymers, for example polyethylene and copolymers of ethylene and vinyl acetate, it may be desirable to cross-link the olefin polymer once the polymer composition has been formed into a shaped article.

Cross-linking of the olefin polymer component may be achieved using any of the known techniques such as free radical, especially peroxide; radiation; or silane cross-linking.

Silane cross-linking can be effected by pre-reacting the olefin polymer component with a silane, mixing the silane-modified olefin polymer component with one or more filler materials and the processing aid to form the polymer composition, shaping the polymer composition to form the desired shaped article and thereafter treating the shaped article with a suitable reagent, such as water, to effect cross-linking of the silane-modified olefin polymer.

Radiation cross-linking is effected by shaping the polymer composition to form the desired shaped article and thereafter subjecting the shaped article to irradiation, for example electron beam irradiation or gamma radiation from a cobalt-60 source, to effect cross-linking of the olefin polymer component. Using either of the foregoing techniques, the polymer composition can be shaped to form the desired shaped article using conventional injection moulding or extrusion conditions.

Cross-linking is preferably effected by using a free radical generator, such as a peroxide. A shaped article can be injection moulded by injecting the polymer composition containing the free radical generator at a moderate temperature, for example, when the olefin polymer is a copolymer of ethylene and vinyl acetate, at a temperature of up to 150°C and typically in the range 110°C up to 140°C, and heating in the mould to a temperature which is sufficiently high to cause cross-linking. The temperature to which the mould is heated is typically in the range 140°C up to 220°C, preferably 150°C up to 200°C, and especially 160°C up to 190°C, but will be dependent on the half-life characteristics of the free radical generator used. The polymer composition can also be used to form a shaped article, for example a coated electrical conductor, by an extrusion process. Using an extrusion process, the polymer composition is extruded at a temperature below that at which cross-linking occurs and the extrudate is then passed through an environment maintained at a temperature sufficiently high to cause cross-linking to occur. Preferably, to avoid foaming during the cross-linking stage, cross-linking is effected in an environment which is also at an elevated pressure, for example 10 up to 30 kg/cm$^2$ gauge, especially 12 up to 18 kg/cm$^2$ gauge. Suitable peroxides which may be used to form cross-linked materials include dicumyl peroxide; 1,3-bis(tertiary-butylperoxy isopropyl) benzene; 2,5-dimethyl-2,5-di(tertiary-butylperoxy) hexane and 2,5-dimethyl-2,5-di(tertiary-butylperoxy) hexyne-3. The proportion of peroxide used to effect cross-linking is conveniently in the range 0.2 to 6%, preferably 0.5 to 4% and especially 0.5 up to 1.5%, by weight relative to the weight of the olefin polymer component of the composition.

If a fire retardant composition is subjected to cross-linking using a peroxide, it will be appreciated that cross-linking should be effected at a temperature below that at which decomposition of the fire retardant component occurs. Hence, the peroxide and the fire retardant component should be carefully selected to ensure that cross-linking can be effected without decomposing the fire retardant component. It is preferred that cross-linking is effected at a temperature below 260°C and that the fire retardant component decomposes at a temperature of at least 260°C.

The compositions of the present invention may be obtained by blending the components together using any known technique. Blending is conveniently effected using a melt mixing technique, for example using a 2 roll mill or, preferably, an internal mixer such as a Banbury mixer.

The preferred fire retardant compositions in accordance with the present invention can be used as the insulator, cable filler and/or the outer sheath, in an electric wire or cable.

Thus, as a preferred aspect of the present invention there is provided an insulated electrical conductor wherein the fire retardant composition of the present invention forms the insulator on the conductor and/or an outer sheath around one or more insulated conductors.

The production of compositions in accordance with certain aspects of the present invention is described in the following illustrative examples, in which some properties of the compositions produced are also given.

In all of the following Examples, and Comparative Examples, unless stated to the contrary, the melt flow index (MFI) was measured according to British Standard 2782, Part 1/105C of 1976 using a 2.16 kg load at 190°C.

## EXAMPLES 1 AND 2

Compositions were prepared by blending the components together on a two roll mill, one roll being at about 100°C and the other roll being at about 20°C. The polymer components were added first and were worked until melting occurred. The other components were then added to the mill and blending was continued for 10 to 15 minutes until the fillers were completely homogenised and there was no evidence of particulate agglomeration, that is there were no white specks in the crepe.

All of the compositions were based on a fire retardant system having the following composition:

30 parts by weight of a copolymer of ethylene and vinyl acetate having a vinyl acetate content of 28% by weight and a melt flow index of 6;

10 parts by weight of a copolymer of ethylene and vinyl acetate having a vinyl acetate content of 33% by weight and a melt flow index of 25;

45 parts by weight of precipitated magnesium hydroxide (99% by weight having a particle size of less than 50 microns) obtainable from Steetley Magnesia as Lycal 96HS;

15 parts by weight of precipitated calcium carbonate, having a coating of 2% by weight of calcium stearate, and all particles of size less than 0.1 micron; and 0.4 parts by weight of polymerised 1,2-dihydro-2,2,4-trimethylquinoline.

In addition to the foregoing fire retardant system (with the exception of Comparative Example A) there was added a processing aid, as detailed in Table One. The melt flow index of each of the resultant polymer compositions was determined and the results are given in Table One.

Table One

| Example or Comparative Example | Processing aid (a) | MFI |
|---|---|---|
| A | NIL | 0.09 |
| 1 | ZS(1) + ESBO(1) | 0.35 |
| 2 | ZS(2) + ESBO(2) | 1.22 |
| B | ESBO(5) | 0.59 |
| C | DOP(5) | 0.36 |
| D | EVA(5) + ESBO(2) | 0.74 |

Notes to Table One

(a) The number in brackets represents the parts by weight of the additive.

ZS is zinc octadecanoate.

ESBO is an epoxidised soya bean oil having an epoxy oxygen content of 6.2% by weight.

DOP is di-(2-ethylhexyl) phthalate;

EVA is a copolymer of ethylene and vinyl acetate having a vinyl acetate content of 28% by weight and a melt flow index of 400.

## EXAMPLES 3 TO 12

The procedure of Examples 1 and 2 was repeated using a different fire retardant system and other processing aids.

The fire retardant system used in these Examples and Comparative Examples had the following composition:

40 parts by weight of a copolymer of ethylene and vinyl acetate having a vinyl acetate content of 28% by weight and a melt flow index of 6;

40 parts by weight of magnesium hydroxide (as used in Examples 1 and 2);

20 parts by weight of calcium carbonate (as used in Examples 1 and 2);

3 parts by weight of finely divided calcium oxide, all particles having a particle size of less than 125 microns; and

0.4 parts by weight of polymerised 1,2-dihydro-2,2,4-trimethylquinoline.

The melt flow index of each composition was determined. Each composition was melt homogenised at 100°C on a two roll mill with 0.7% by weight, relative to the polymer composition, of dicumyl peroxide and then formed into a plaque (160 mm square and 3 mm thick) by placing about 140 g of the composition between PTFE coated glasscloth in a press preheated at 180°C. The composition was compression moulded at 180°C and an applied pressure of 70 kg/cm for 10 minutes. The press was then cooled by passing water at ambient temperature through the cooling coils whilst still under pressure and the plaque was removed on attaining ambient pressure. Samples were cut from the plaques using a dumb bell cutter (Type 2, BS 903; Part A2). The samples were aged in a circulating air oven at 150°C for a period of one week. Details of the processing aids, the melt flow index and the result of the heat ageing test are given in Table Two.

Table Two

| Example or Comparative Example | Processing aid (a) (b) | MFI | Heat test retention of elongation (%) (c) |
|---|---|---|---|
| 3 | ZS(2) + ESBO(2) | 0.47 | 95 |
| 4 | ZS(1) + ESBO(1) | 0.21 | 49 |
| 5 | ZS(3) + ESBO(3) | 1.28 | 97 |
| 6 | ZS(2) + TGS(2) | 0.80 | 73 |
| 7 | ZS(2) + DOP(2) | 0.44 | 45 |
| 8 | ZS(2) + P95(2) | 0.90 | 35 |
| 9 | ZS(2) + P65(2) | 0.94 | 37· |
| 10 | ZS(2) + PTOF(2) | 0.40 | 36 |
| 11 | CS(2) + ESBO(2) | 0.46 | 62 |
| E | BS(2) + ESBO(2) | 0.15 | 91* |
| 12 | ZS(2) + BS(2) | 0.80 | 44 |
| F | ZS(2) + PW(2) | 0.30 | 40 |
| G | ZS(2) + LEVA(2) | 0.37 | 47 |

Notes to Table Two

(a) is as defined in Notes to Table One.

(b) TGS is glyceryl tri (hydroxydodecanoate).

P95 is trixylyl phosphate.

P65 is tritolyl phosphate.

PTOF is tris-(2-ethylhexyl)phosphate.

CS is calcium dodecanoate.

BS is n-butyl dodecanoate.

PW is a low molecular weight (M.Wt = 9000) polyethylene having a density of about 0.95 g/cm$^3$ and a melting point of about 130°C.

LEVA is a low molecular weight copolymer of ethylene and vinyl acetate having a vinyl acetate content of 27% by weight and a melt viscosity at 140°C of 600 cp.

(c) The elongation of the polymer composition was determined on unaged samples and on samples which had been aged at 150°C for one week and the result quoted is given by the relationship

$$\frac{\text{\% elongation of aged sample}}{\text{\% elongation of unaged sample}} \times 100$$

Elongation to break was measured using an Instron 1122 tensometer at an elongation rate of 500 mm/minute measured at 23°C.

* The elongation to break of the unaged sample was 230% whereas for the other unaged samples the elongation to break was in the range 500 to 600%.

### EXAMPLES 13 TO 17

The procedure of Examples 1 to 2 was repeated using a system suitable for use as a sound deadening material and containing barium sulphate.

The sound deadening system used in the following Examples and the Comparative Example had the following composition:

30 parts by weight of a copolymer of ethylene and vinyl acetate having a vinyl acetate content of 28% by weight and a melt flow index of 6;

70 parts by weight of barium sulphate; and 0.4 parts by weight of 1,2-dihydro-2,2,4-trimethyl-quinoline.

The melt flow index of each composition was determined and the results are given in Table Three.

### Table Three

| Example or Comparative Example | Processing aid (a) (b) | MFI |
|---|---|---|
| H | Nil | 5.0 |
| 13 | ZS(2) + ESBO(2) | 8.5 |
| 14 | ZS(3) + ESBO(3) | 11.0 |
| 15 | ZS(4) + ESBO(4) | 8.2 |
| 16 | ZS(2) + P65(2) | 9.6 |
| 16 | ZS(2) + P95(2) | 10.6 |

Notes to Table Three

(a) is as defined in Notes to Table One.

(b) is as defined in Notes to Table Two.

### EXAMPLE 18

A polymeric composition was prepared as described in Examples 1 and 2 using the following ingredients.

40 parts by weight of a copolymer of ethylene and vinyl acetate having a vinyl acetate content of 28% by weight and a melt flow index of 6;

40 parts by weight of precipitated magnesium hydroxide (as used in Examples 1 and 2);

20 parts by weight of precipitated calcium carbonate (as used in Examples 1 and 2);

0.4 parts by weight of polymerised 1,2-dihydro-2,2,4-trimethylquinoline;

2 parts by weight of epoxidised soya bean oil (as used in Examples 1 and 2); and

2 parts by weight of zinc octadecanoate.

The polymer composition had a melt flow index of 0.5. The polymer composition was blended with dicumyl peroxide and formed into plaques 160 mm square and either 1.5 mm or 3 mm thick using the procedure as described in Examples 3 to 12 with the exception that a proportionately smaller quantity of material was used to prepare the 1.5 mm thick plaque. Materials cut from the plaques were used in burning tests to determine the toxicity and density of the fumes (smoke) evolved.

To determine toxicity of the fumes, 3 g of material cut from the 3 mm thick plaque were used. The toxicity of the fumes was determined in accordance with Naval Engineering Standard (NES) 713, published by the Procurement Executive Ministry of Defence, Ship Department Section D19, Foxhill, Bath.

Smoke density was measured using samples 75 mm square cut from the 1.5 mm thick plaque. Smoke density was measured, in the flaming mode, using an NBS smoke chamber in accordance with ASTM Test Method E 662-79.

The toxicity index was found to be 1.4 and the smoke density 21.

For the purposes of comparison, typical results for polyvinyl chloride, or a polyolefin composition containing a halogenated fire retardant component, are toxicity index of at least 5 and a smoke density of at least 500.

EXAMPLE 19

A polymeric composition was prepared as described in Examples 1 and 2 using the following ingredients

40 parts by weight of a copolymer of ethylene and vinyl acetate having a vinyl acetate content of 28% by weight and a melt flow index of 6;

60 parts by weight of aluminium hydroxide 99.9% by weight of which passed through a 45 micron sieve, with a median particle size of 5-6 microns and having a free moisture content of 0.5% weight; and

0.4 parts by weight of polymerised 1,2-dihydro-2,2,4-trimethylquinoline.

The melt flow index of the composition was determined with and without a processing aid. The melt flow index is given in Table Four.

EXAMPLE 20

A polymeric composition similar to that of Example 19 was prepared as described in Examples 1 and 2 with the exception that the 60 parts of aluminium hydroxide were replaced by the following ingredients:-

50 parts by weight of the aluminium hydroxide used in Example 19 which had been dried overnight in an air oven at 120°C and

10 parts by weight of finely divided calcium oxide (as used in Examples 3 to 12).

The melt flow index of the composition was determined with and without a processing aid. The melt flow index is given in Table Four.

TABLE FOUR

| Example or Comparative Example | Processing aid (a) | MFI |
|---|---|---|
| J | Nil | 1.1 |
| 19 | ZS(2) + ESBO(2) | 3.8 |
| K | Nil | 0.3 |
| 20 | ZS(2) + ESBO(2) | 2.0 |

Notes to Table Four

(a) is as defined in Notes to Table One.

EXAMPLES 21 TO 30

A large quantity of a polymeric composition was prepared as described in Example 1 and 2 using the following ingredients in the following proportions:-

50 parts by weight of a polymer of ethylene and vinyl acetate having a vinyl acetate content of 28% by weight and a melt flow index of 6;

35 parts by weight of magnesium hydroxide (as used in Examples 1 and 2);

15 parts by weight of calcium carbonate (as used in Examples 1 and 2);

3 parts by weight of finely divided calcium oxide (as used in Examples 3 to 12);

0.5 parts by weight of polymerised 1,2-dihydro-2,2,4-trimethylquinoline; and

0.1 parts by weight of N, N'-bis (beta-3,5-ditertiarybutyl-4-hydroxy phenylpropiono)hydrazide.

103.6 parts by weight of this composition was then melt homogenised at 100°C on a two roll mill with various processing aid compositions. The melt flow index of each composition was determined, together with a composition not containing any processing aid. Details of the processing aids and the melt flow index are given in Table Five.

TABLE FIVE

| Example or Comparative Example | Processing aid (a) | MFI |
|---|---|---|
| L | Nil | 0.15 |
| 21 | ZS(1) + ESBO(2) | 0.8 |
| 22 | ZS(2) + ESBO(2) | 1.6 |
| 23 | ZS(3) + ESBO(3) | 2.1 |
| 24 | ZS(3) + ESBO(1) | 1.3 |
| 25 | ZS(1) + ESBO(3) | 1.1 |
| 26 | ZS(3) + ESBO(2) | 1.6 |
| 27 | ZS(2) + ESBO(3) | 1.6 |
| 28 | ZS(2) + ESBO(4) | 2.0 |
| 29 | ZS(4) + ESBO(2) | 1.9 |
| 30 | ZS(2.5)+ ESBO(2.5) | 1.8 |

Notes to Table Five

(a) is as defined in Notes to Table One.

CLAIMS

1.    A polymer composition comprising an olefin polymer, a filler material and a processing aid wherein the composition contains from 30 up to 90% by weight of the filler material, based on the total weight of the polymer composition, and from 2 up to 8% by weight of the processing aid, based on the total weight of the polymer composition, where the processing aid is a mixture of a) 20 up to 80% by weight of a metal salt of a carboxylic acid containing at least 6 carbon atoms and correspondingly b) 80% to 20% by weight of either an organic ester which is derived from a carboxylic acid containing at least 6 carbon atoms; an organic phosphate; or a plant oil.

2.    A composition as claimed in claim 1 wherein the olefin polymer is polyethylene or a copolymer of ethylene with an unsaturated carboxylic acid or an ester of such an acid.

3.    A composition as claimed in either claim 1 or claim 2 wherein the olefin polymer component is a mixture of olefin polymers.

4.    A composition as claimed in any one of claims 1 to 3 wherein the filler material is at least one of magnesium hydroxide, aluminium hydroxide, calcium carbonate, silica, alumina. magnesia, calcium oxide, antimony trioxide, glass fibre, iron oxide, barium sulphate, talc, mica or powdered slate.

5.    A composition as claimed in any one of claims 1 to 4 wherein the filler material is one or more compounds which provide fire retardant and/or smoke suppresant characteristics to the polymer composition and contains less than 10% by weight of the total composition of a halogen-containing compound.

6. A composition as claimed in any one of claims 1 to 5 wherein the processing aid is a mixture of a) 40 up to 60% by weight of a metal salt of a carboxylic acid containing at least 6 carbon atoms and correspondingly b) 60 to 40% by weight of either the organic ester, the organic phosphate or the plant oil.

7. A composition as claimed in any one of claims 1 to 6 wherein the salt of a carboxylic acid is a salt of a metal of Group IA or Group IIA of the Periodic Table with dodecanoic acid, hexadecanoic acid or octadecanoic acid.

8. A composition as claimed in any one of claims 1 to 8 wherein the processing aid contains a plant oil which is an epoxidised soya bean oil.

9. A composition as claimed in any one of claims 1 to  8 which comprises a copolymer of ethylene with 15 to 35% by weight of vinyl acetate; 30 to 90% by weight of the total composition of a filler material; and 2 to 8% by weight of a processing aid which is a mixture of 20 to 80% by weight of zinc octadecanoate and correspondingly 80 to 20% by weight of an epoxidised soya bean oil.

10. A composition as claimed in any one of claims 1 to 9 which includes a free-radical generator which is capable of causing cross-linking of the olefin polymer.

11. An electric wire or cable wherein the insulator and/or the outer sheath is formed from a composition as claimed in claim 5 wherein the olefin polymer is polyethylene or a copolymer of ethylene and vinyl acetate and the composition contains from 25 up to 60% by weight, based on the polymer composition, of magnesium hydroxide or aluminium hydroxide, and from 0 up to 25% by weight, based on the polymer composition, of precipitated calcium carbonate.

12. A process for the production of a polymer composition wherein the components as claimed in any one of claims 1 to 10 are blended together using a melt mixing technique.